# EUROPEAN PATENT SPECIFICATION

(11) **EP 3 191 330 B1**
(45) Date of publication and mention of the grant of the patent: **04.09.2019**
(21) Application number: 14901617.2
(22) Date of filing: 12.09.2014
(51) Int. Cl.: B60H 1/24, B60H 1/34

(54) **AIR VENT DEVICE COMPRISING A FLEXIBLE MEMBRANE FOR SHUTTING THE AIR VENT DEVICE**
LUFTAUSSTRÖMER MIT EINER FLEXIBLEN MEMBRAN ZUM SCHLIESSEN DES LUFTAUSSTRÖMERS
DISPOSITIF DE PURGE D'AIR COMPRENANT UNE MEMBRANE FLEXIBLE SERVANT À FERMER LE DISPOSITIF DE PURGE D'AIR

(43) Date of publication of application: 19.07.2017
(73) Proprietor: Faurecia Interior Systems India Pvt. Ltd., Pune, Maharashtra 411026 (IN)
(72) Inventor: SIDDIQUI, Firoz, Pune Maharashtra 411018 (IN); BHATTAD, Jaykumar, Pune -411015 (IN)
(74) Representative: Lavoix
(86) International application number: PCT/IN2014/000590
(87) International publication number: WO 2016/038620

(56) References cited:
- EP-A1- 0 500 421
- CN-A- 1 746 044
- CN-A- 1 919 629
- CN-A- 103 201 126
- DE-A1-102009 009 241
- DE-B3-102007 019 602
- FR-A1- 2 784 624
- GB-A- 2 468 285
- SU-A1- 1 659 242

## Description

The present invention relates to an air vent device for a vehicle comprising:
- an air duct extending along a longitudinal axis,
- an air outlet device extending at a downstream extreme part of the air duct and defining an outlet through which air circulating in the air duct exits the air vent device, said air outlet device extending according to a main axis and being movable relative to said air duct such that the direction of the air flow passing through the outlet can be controlled depending on the position of the air outlet device in the air duct,
- an actuator fixedly attached to the air outlet device and arranged to move the air outlet device relative to the air duct, and
- a closing element movable between an opened position, wherein air is allowed to circulate through the outlet, and a closed position, wherein the closing element prevents fluidic communication between the air duct and the outlet, the actuator being attached to the closing element and being movable in translation along the main axis relative to the air outlet device, said movement in translation causing the closing element to move between the opened and closed position.

The ventilation system for the compartment of a motor vehicle generally emerges in at least one opening provided in the dashboard of the vehicle. An air outlet device closes this opening and makes it possible to control the direction of the flow of air leaving the ventilation system via an air duct placing the air outlet device in fluidic communication with the ventilation system.

One efficient way to accurately control the air flow is to use an air outlet device having a housing forming a ball-joint connection with the air duct such that the air outlet device can be moved in any direction relative to the air duct.

However, such an air vent device is difficult to implement with a device for closing the fluidic communication between the outlet and the air duct in order to prevent air from being ventilated in the compartment of the vehicle. Such a device is generally controlled via an actuator separate from the actuator controlling the orientation of the deflector grill, which makes the structure of the air vent device more complicated and more space consuming. Alternatively, for preventing air from flowing out of the air vent device, the ventilation system has to be completely stopped, which is not satisfactory when several air vent devices are provided and when one wants to shut down only one of these air vent devices.

Document GB 2 468 285 discloses an air vent device for a vehicle comprising a closing element comprising at least one flexible membrane, which is streched in an opened position, and is fold over between a control stem and the housing member to achieve a closing position. One of the aims of the invention is to provide a robust air vent device providing an efficient way to control the direction of the air flow exiting the air vent device in a simple manner and easy to implement with means for closing the fluidic communication between the air duct and the air outlet device.

To this end, the invention relates to an air vent device of the afore-mentioned type, wherein said closing element comprises at least one flexible membrane, movable between a folded position, wherein the flexible membrane is folded around the main axis in the opened position of the closing element, and a deployed position, wherein the membrane extends radially in the air outlet device and seals the air outlet device in the closed position of the closing element.

The deployment of flexible membrane is an efficient way to close the air outlet device, while being controllable with the same actuator used to control the direction of the airflow. In the folded state, the membrane uses little space in the air outlet device, which makes the volume of air exiting the air outlet device more important.

According to other features of the air vent device according to the invention:
- a first end of the membrane is attached to the actuator, a second end of the membrane, opposite the first end, cooperating with at least one guiding ramp of the air outlet device, said guiding ramp extending substantially radially between a wall of the air outlet device and the main axis, such that the movement of the actuator along the main axis causes the second end of the membrane to slide on the guiding ramp in order to move the flexible membrane between its folded position and its deployed position;
- the closing element comprises at least one guiding element attached to the second end of the flexible membrane, said guiding element being movable in a sliding manner on the guiding ramp of the air outlet device;
- the guiding element comprises a guiding pin inserted in a guiding slot provided in the guiding ramp, said guiding pin being movable in a sliding manner in said guiding slot;
- the closing element comprises a plurality of guiding elements distributed around the main axis, each guiding element being placed on a corresponding guiding ramp extending substantially radially between the wall of the air outlet device and the main axis;
- the closing element comprises a plurality of flexible membranes, each flexible membrane extending between two successive guiding elements;
- the guiding elements are molded on the flexible membrane;
- the air outlet device comprises a housing, said housing comprising an outer wall in frictional contact with an inner wall of the air duct, an being movable in rotation relative to said inner wall of the air duct, such that the direction of the air flow passing through the outlet can be controlled depending on the position of the housing in the air duct;
- the actuator comprises a central rod extending along the main axis of the air outlet device, said central rod being movable in translation along the main axis in a central recess attached to the housing;
- the central rod and the central recess comprise a plurality of cooperating locking elements arranged to lock the central rod in the central recess in various axial positions of the actuator, corresponding to various deployment states of the membrane in the air outlet device;
- the actuator comprises a deflector element extending across the housing, said deflector element being movable in translation along the main axis against the inner wall of the housing;
- the inner wall of the housing comprises a shoulder extending substantially radially, said shoulder covering the end of the flexible membrane when said membrane is in the deployed position; and
- the flexible membrane has a thickness comprised between 0,1 mm and 0,3 mm.

The invention also relates to an interior trim part for a vehicle comprising the air vent device as described above.

Other aspects and advantages of the invention will appear upon reading the following description, given by way of example and made in reference to the appended drawings, wherein:
- Fig. 1 is a perspective view of the air vent device according to the invention,
- Fig. 2 is perspective and partially cut away view of the air vent device of Fig. 1,
- Figs. 3 and 4 are views in axial cross-section of the air-vent device of Fig. 2, the air outlet device being in different positions modifying the direction of the air flow, the closing element being in the opened position,
- Fig. 5 is a view in axial cross-section of the air-vent device of Fig. 2, the closing element being in the closed position, and
- Fig. 6 is a perspective view of the closing element in the closed position and of the actuator of the air vent device of Fig. 2.

In the following description, the terms "upstream" and "downstream" are defined relative to the direction of the flow of air circulating in the air vent device. The term "longitudinal" is defined along a plane in which the upstream-downstream direction extends. The term "transverse" is defined along a plane substantially perpendicular to the longitudinal plane.

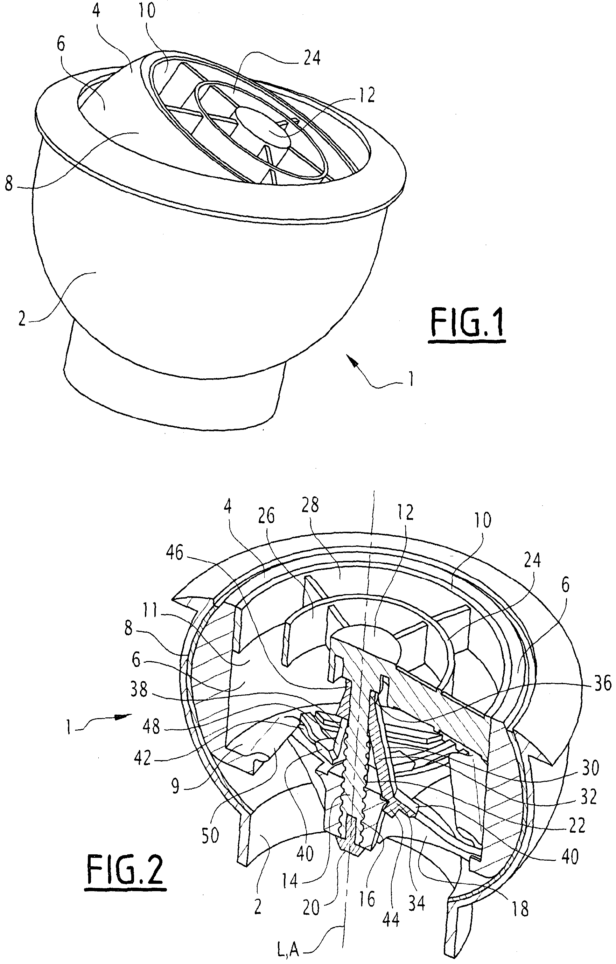

In reference to Fig. 1, an air vent device 1 is described for traditionally extending and opening in the dashboard (not shown) of a vehicle and connected to a ventilation system (not shown) of the vehicle. The air vent device 1 is further adapted to be assembled to any interior trim part of a vehicle, such as a console, pillars, or other trim parts.

The air vent device comprises an air duct 2, extending along a longitudinal axis L, and an air outlet device 4 extending in the downstream end part of the air duct 2.

The air duct 2 is a rigid tubular member. By rigid, it is meant that the cross section of the air duct 2 is substantially constant along the longitudinal axis L. The cross section of the duct is defined as the section of the duct in a transversal plane, i.e. in a plane substantially perpendicular to the longitudinal axis. It is understood that the air duct can be flexible to have a shape adapted to the path the air duct 2 has to follow. The air duct 2 can have any appropriate shape to follow the path between the ventilation system and the place from which the air is intended to be ventilated in the compartment of the vehicle, for example in the dashboard of the vehicle. The air duct 2 comprises an upstream end part (not shown), connected to an outlet of the ventilation system, and a downstream end part. The air duct 2 is fixed, i.e. immovable relative to the vehicle, when the air vent device is installed in the vehicle.

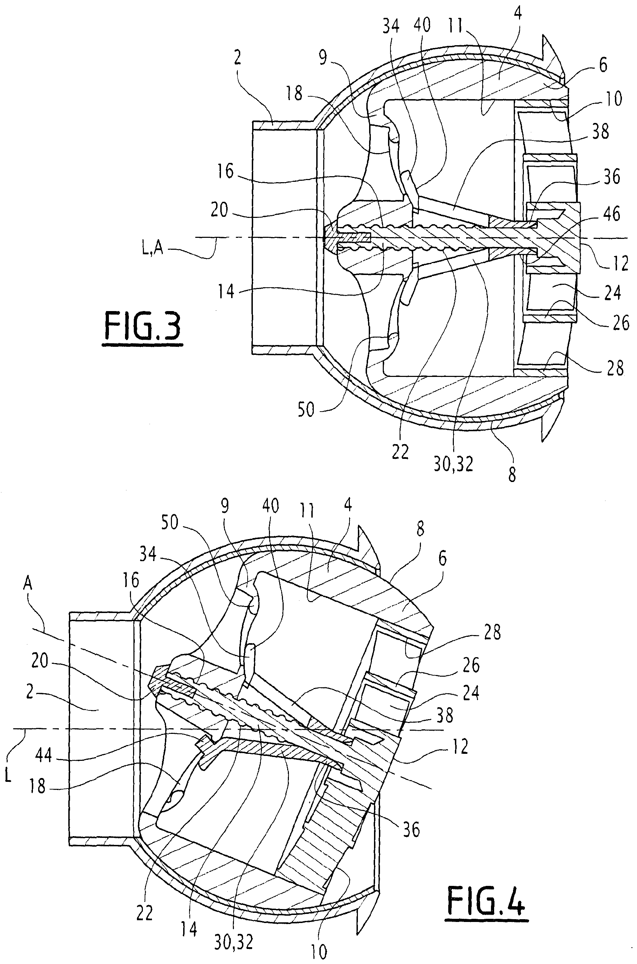

The downstream end part of the air duct 2 has a hemispherical shape and the air outlet device 4 is placed in the downstream end part. The air outlet device 4 comprises a housing 6 having an outer wall 8 having a shape substantially complementary of the shape of the downstream end part of the air duct 2. More particularly, the outer wall 8 of the housing 6 is in frictional contact with the inner wall of the downstream end part of the air duct 2 such that the downstream end part of the air duct 2 forms the ball portion and the housing 6 forms the joint portion of a ball-joint connection between the air duct 2 and the air outlet device 4. In this manner, the air outlet device 4 can be moved in rotation in any direction inside the downstream end part of the air duct 2 as shown in Figs 1 and 4. It should be noted that the frictional connection between the air duct 2 and the housing 6 is a fluid tight connection and appropriate sealing means can be placed between the air duct 2 and the housing 6 in order to guarantee that all the air circulating in the air duct 2 enters the housing 6 and does not leak between the air duct 2 and the housing 6.

The housing 6 is a substantially tubular part extending along a main axis A and opened at both its axial ends. The upstream axial end 9 of the housing 6 is in fluidic communication with the air duct, such that air circulating in the air duct enters the housing 6 via the upstream axial end. The downstream axial end 10 is in fluidic communication with the upstream axial end and forms the outlet of the air vent device, meaning that the air circulating in the air vent device is ventilated in the vehicle compartment through the downstream axial end 10 of the air outlet device 4. Air circulating in the housing 6 is guided from the upstream axial end 9 to the downstream axial end 10 by an inner wall 11, opposite the outer wall 8 and having for example a substantially circular cross-section.

When the main axis A is aligned with the longitudinal axis L, air exits the air outlet device through the downstream axial end 10 according to a longitudinal direction, as shown in Fig.3. By rotating the housing 6 relative the air duct 2, such that the main axis A is displaced relative to the longitudinal axis L, the direction of the air exiting the air vent device through the outlet can be modified and controlled, as shown in Fig. 4. The ball-joint connection described above offers a satisfactory air directivity to the air vent device 1, as known per se.

To control the orientation of the air outlet device 4 relative to the air duct, the air outlet device comprises an actuator 12 fixedly attached to the air outlet device and arranged to move the air outlet device relative to the air duct 2 in all possible directions.

The actuator 12 is for example attached to the housing 6 at least via a central rod 14 extending along the main axis A and placed in a central recess 16 extending around and along the main axis A in the upstream axial end 9 of the housing 6. The central recess 16 is a part of the housing 6 and is connected to the inner wall 11 of said housing 6 by one or a plurality of arms 18 extending substantially radially between the inner wall 11 of the housing 6 and the central recess 16. The arms 18 are for example regularly distributed around the main axis A and are sufficiently spaced for allowing a satisfactory air flow in the housing 6.

The central rod 14 extends in the central recess 16 and protrudes from the downstream end of said central recess 16 such that the downstream end of the central rod 14 is located in the vicinity of the downstream axial end 10 of the housing 6. The actuator 12 is formed by or is attached to the downstream end of the central rod 14.

As will be described in greater detail subsequently, the central rod 14, and hence the actuator 12, is movable in translation along the main axis A relative to the housing 6. Consequently, the central rod 14 is mounted such that it can slide along the main axis A in the central recess 16.

In normal use of the air vent device 1, as shown in Figs. 3 and 4, the central rod 14 is in an extreme downstream position, wherein the downstream end of the central rod 14 extends in the downstream axial end 10 of the housing 6 and wherein the upstream end of the central rod 14 is in abutment against the upstream end of the central recess 16, preventing the central rod 14 from exiting the central recess 16. To this end, the upstream end of the central rod 14 is provided with an abutment element 20, for example formed by a pawn attached to the upstream end of the central rod 14. The abutment element 20 can be removable for allowing a dismantlement of the air vent device 1 if needed.

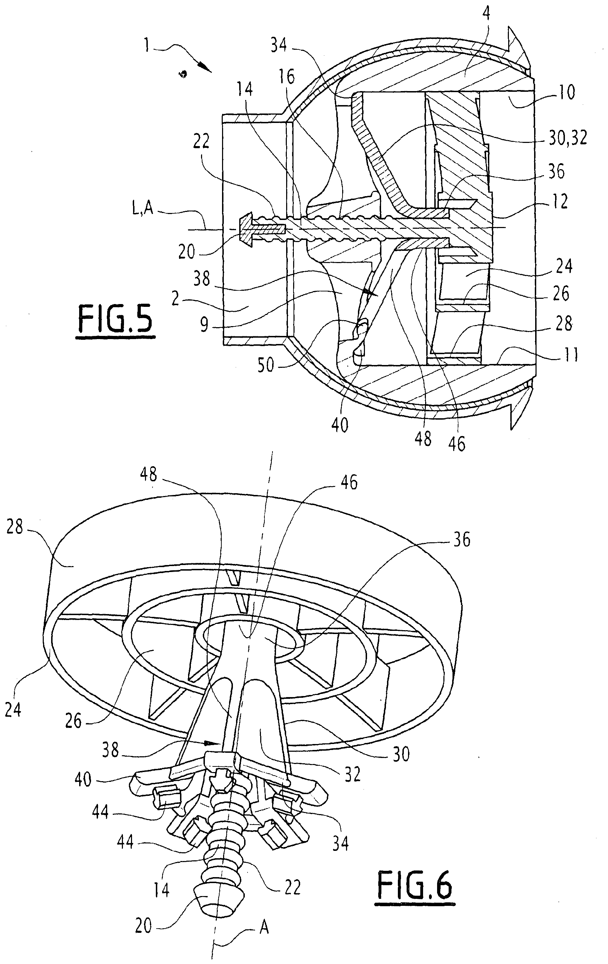

In a closed position, described subsequently and shown in Fig. 5, the central rod 14 is in an extreme upstream position, wherein the downstream end of the central rod 14 extends inside the housing 6 more upstream than in the normal use and the upstream end of the central rod 14 protrudes from the upstream end of the central recess 16.

Between the extreme upstream and downstream positions, the central rod 14 can be locked in various positions in the central recess 16. To this end, the central rod 14 for example comprises a plurality of locking elements 22, for example radially protruding ribs, arranged to cooperate with complementary locking elements, for example radially extending notches, provided in the central recess 16. The locking elements 22 are for example overmolded on the central rod 14. In this manner, the central rod 14 and the actuator 12 can be locked in various axial positions of the central rod 14 relative to the housing 6.

The actuator 12 is for example a part of a deflector element 24 extending in the vicinity of the downstream axial end 10 of the housing 6. The deflector element 24 comprises at least one air guiding surface 26 extending across the housing 6 in a transversal direction and arranged to guide the air coming from the air duct 2 according to the plane in which the air guiding surface 26 extends. By modifying this plane, it is possible to modify the direction of the air flow. According to the embodiment shown in the figures, the deflector element 24 comprises several concentric rings extending around the actuator 12 and the main axis A and radial branches connecting the rings. The outer ring 28 is in frictional contact with the inner wall 11 of the housing 6. This embodiment is only an example of an adapted deflector element, which could also have another shape, such as for example a regular grill.

Consequently, the actuator 12 is attached to the housing 6 both by the central rod 14 and by the outer ring 28, while being movable in translation along the main axis A relative to the housing 6. It is therefore understood that, by actuating the actuator 12 in rotation, the housing 6 is displaced in rotation relative to the air duct 2, thereby controlling the direction of the air flow exiting the air outlet device as shown in Fig. 4, and that, by actuating the actuator 12 in translation, the actuator 12, the central rod 14 and the deflector element 24 are displaced in translation relative to the housing 6 and to the central recess 16, as shown in Fig. 5.

The air outlet device 4 further comprises a closing element 30 arranged to prevent the fluidic communication between the air duct 2 and the outlet of the air outlet device 4 when the actuator is actuated to one of its extreme positions.

The closing element 30 comprises at least one flexible membrane 32 having a first end, for example an upstream end part 34, attached to the housing 6 and a second end, for example a downstream end part 36 attached to the actuator 12. The flexible membrane 32 has a skirt like shape and extends around the central rod 14 in the upstream-downstream direction, as shown in Figs 2 to 6.

The flexible membrane 32 is made of an elastic, or stretchable, and non-porous material, such as a thermoplastic elastomer (TPE). The material of the flexible membrane is therefore adapted to be deformed and to recover its initial shape and to prevent the passage of air through the membrane. The flexible membrane 32 is thin and has for example a thickness comprised between 0.1 mm and 0.3 mm, for example around 0.2 mm.

The closing element 30 further comprises a more rigid armature 38 attached to the membrane 32. The armature 38 comprises at least one guiding element 40 extending at the upstream end part 34 of the flexible membrane and arranged to be applied against one of the arms 18 extending between the inner wall 11 and the central recess 16 of the housing 6. The arm 18 forms a guiding rail arranged to guide the guiding element 40 from a position close to the central rod 14 to a position close to the inner wall 11 as will be described subsequently. To this end, the arm 18 for example comprises a guiding slot 42 extending through the arm 18 and receiving a guiding pin 44 (Fig. 6) of the guiding element 40 such that the guiding pin 44 is able to slide in the guiding slot 42, which extends substantially radially. According to the embodiment shown in the figures, the arm 18 is slightly inclined relative to the radial direction such that the arm 18 forms a slope extending in the downstream-upstream direction. The shapes of the guiding pin 44 and of the guiding slot 42 are arranged such that the guiding element 40 is attached to the arm 18 when the guiding pin 44 is placed in the guiding slot 42. According to an embodiment, the armature 38 comprises as many guiding elements 40 as there are arms 18 and each arm 18 comprises a guiding slot 42 receiving one of the guiding pins 44 of the guiding elements 40, as shown in Fig. 2 and 6.

The armature 38 further comprises a tubular part 46 extending around the downstream end part 36 of the membrane 32 and clamping the membrane around the central rod 14. This tubular part 46 provides a robust and immovable attachment between the closing element 30 and the central rod 14 and the actuator 12.

The armature 38 further comprises arms 48, each arm 48 extending between the tubular part 46 and one of the guiding elements 40. The arms 48 allow slightly rigidifying the flexible membrane 32 such that the membrane 32 retains its skirt like shape.

The armature 38 is for example overmolded on the flexible membrane 32. It should be understood that the shape of the armature described above is an example and that the armature can have a different structure. For example, the armature can simply comprise the guiding elements 40 which can be separate elements each overmolded on the flexible membrane. According to another embodiment, the closing element 30 comprises a plurality of membranes 32 each extending between two successive arms 48 of the armature 38.

The closing element 30 is movable, along with the translation movement of the actuator 12, between an opened position (Figs. 2 to 4) and a closed position (Fig. 5).

The closing element 30 is in the opened position when the actuator 12 and the central rod 14 are in the downstream extreme position. In the opened position, the flexible membrane 32 is in a folded position around and close to the central rod 14. In this position the guiding elements 40 are located on the end of the guiding rails formed by the arms 18 close to the central recess 16. In this position, the closing element 32 occupies a reduced space in the housing 6 and allows the passage of air towards the axial downstream end 10 of the housing, thereby allowing air to exit the air vent device 1 through the outlet.

The closing element 30 is in the closed position when the actuator 12 and the central rod 14 are in the upstream extreme position. In the closed position, the flexible membrane 32 is in a deployed position and extends radially from the central rod 14 to the inner wall 11 of the housing 6. In this position, the guiding elements 40 are located on the end of the guiding rails formed by the arms close to the inner wall 11 of the housing 6. In this position, the flexible membrane 32 seals the housing 6 between the axial upstream end 9 and the axial downstream end 10 of the housing, thereby preventing the air coming from the air duct 2 to reach the outlet. In order to provide a fluid tight sealing of the housing 6 when the closing element 30 is in the closed position, the housing 6 for example comprises a shoulder 50 extending substantially radially from the inner wall 11 into the housing 6 in the vicinity of the axial upstream end 9 of the housing 6 between the arms 18. In the deployed position of the membrane 32, the shoulder 50 covers the upstream end part 34 of the membrane 32 such that the upstream end part 34 of the membrane 32 is in fluid tight contact with the housing 6 in the deployed position, thereby preventing any leaking of the air in the closed position of the closing element 30.

The air vent described above allows a satisfactory directivity of the air flow exiting the air outlet device 4 by moving the actuator 12 in rotation to displace the air outlet device 4 relative to the air duct 2 and to displace the main axis A relative to the longitudinal axis L.

To control the amount of air exiting the air vent device 1, the actuator 12 is moved in translation to deploy the flexible membrane 32, thereby reducing the passage of air in the housing 6. By moving the actuator 12 in translation, the armature 38 transmits this movement to the guiding elements 40 via the arms 48 and the guiding elements 40 slide on the guiding rails formed by the arms 18 thereby deploying the flexible membrane. The locking elements 22 of the central rod 14 allow precisely controlling the amount of air by permitting a locking of the flexible membrane 32 in several positions wherein the flexible membrane 32 is more or less deployed.

According to the embodiment shown in the figures, the amount of air is maximal when the actuator 12 and the central rod 14 are placed in the downstream extreme position and the amount of air is null when the actuator and the central rod 14 are placed in the upstream extreme position. Consequently, to reduce the amount of air exiting the air vent device, the user pushes the actuator inside the housing in the downstream-upstream direction. It should be understood however that the air vent device 1 could be arranged such that the reducing of the air amount is obtained by pulling the actuator 12 in the upstream-downstream direction, simply by reversing the position of the flexible membrane 32 and of the arms 18 forming the guiding ramps, i.e. by placing the guiding ramps and the guiding elements 40 in the vicinity of the axial downstream end 10 of the housing and by attaching the flexible membrane 32 to the central rod 14 in the vicinity of the axial upstream end of the housing 6.

It should be noted that the control of the amount of air exiting the air vent device 1 is independent from the control of the direction of the flow of air, meaning that the amount of air can be modified without having to modify the position of the air outlet device 4 relative to the air duct 2.

The closing element 30 requires little space in the housing thereby optimizing the amount of air leaving the air vent device when the closing element 30 is in the opened position and providing a shut-off function to the air vent device without increasing the size of the air vent device 1.

## Claims

1. Air vent device (1) for a vehicle comprising :
- an air duct (2) extending along a longitudinal axis (L),
- an air outlet device (4) extending at a downstream extreme part of the air duct (2) and defining an outlet through which air circulating in the air duct (2) exits the air vent device, said air outlet device (4) extending according to a main axis (A) and being movable relative to said air duct (2) such that the direction of the air flow passing through the outlet can be controlled depending on the position of the air outlet device (4) in the air duct (2),
- an actuator (12) fixedly attached to the air outlet device (4) and arranged to move the air outlet device (4) relative to the air duct (2), and
- a closing element (30) movable between an opened position, wherein air is allowed to circulate through the outlet, and a closed position, wherein the closing element (30) prevents fluidic communication between the air duct (2) and the outlet, the actuator (12) being attached to the closing element (30) and being movable in translation along the main axis (A) relative to the air outlet device, said movement in translation causing the closing element (30) to move between the opened and closed position,
said closing element (30) comprising at least one flexible membrane (32), **characterized in that** said flexible membrane (32) is movable between a folded position, wherein the flexible membrane (32) is folded around the main axis (A) in the opened position of the closing element (30), and a deployed position, wherein the membrane (32) extends radially in the air outlet device (4) and seals the air outlet device (4) in the closed position of the closing element (30).

2. Air vent device according to claim 1, wherein a first end of the membrane (32) is attached to the actuator (12), a second end of the membrane (32), opposite the first end, cooperating with at least one guiding ramp of the air outlet device (4), said guiding ramp extending substantially radially between a wall (11) of the air outlet device (4) and the main axis, such that the movement of the actuator (12) along the main axis (A) causes the second end of the membrane (32) to slide on the guiding ramp in order to move the flexible membrane (32) between its folded position and its deployed position.

3. Air vent device according to claim 2, wherein the closing element (30) comprises at least one guiding element (40) attached to the second end of the flexible membrane (32), said guiding element (40) being movable in a sliding manner on the guiding ramp of the air outlet device (4).

4. Air vent device according to claim 3, wherein the guiding element (40) comprises a guiding pin (44) inserted in a guiding slot (42) provided in the guiding ramp, said guiding pin (44) being movable in a sliding manner in said guiding slot (42).

5. Air vent device according to claim 3 or 4, wherein the closing element (30) comprises a plurality of guiding elements (40) distributed around the main axis (A), each guiding element (40) being placed on a corresponding guiding ramp extending substantially radially between the wall (11) of the air outlet device (4) and the main axis (A).

6. Air vent device according to claim 5, wherein the closing element (30) comprises a plurality of flexible membranes (32), each flexible membrane (32) extending between two successive guiding elements (40).

7. Air vent device according to claim 5, wherein the guiding elements (40) are molded on the flexible membrane (42).

8. Air vent device according to anyone of claims 1 to 7, wherein the air outlet device (4) comprises a housing (6), said housing (6) comprising an outer wall (8) in frictional contact with an inner wall of the air duct (2), an being movable in rotation relative to said inner wall of the air duct (2), such that the direction of the air flow passing through the outlet can be controlled depending on the position of the housing (6) in the air duct (2).

9. Air vent device according to claim 8, wherein the actuator (12) comprises a central rod (14) extending along the main axis (A) of the air outlet device (4), said central rod (14) being movable in translation along the main axis (A) in a central recess attached to the housing (6).

10. Air vent device according to claim 9, wherein the central rod (14) and the central recess (16) comprise a plurality of cooperating locking elements (22) arranged to lock the central rod (14) in the central recess (16) in various axial positions of the actuator (12), corresponding to various deployment states of the membrane (32) in the air outlet device (4).

11. Air vent device according to anyone of claims 8 to 10, wherein the actuator (12) comprises a deflector element (24) extending across the housing (6), said deflector element (24) being movable in translation along the main axis (A) against the inner wall (11) of the housing (6).

12. Air vent device according to anyone of claims 8 to 11, wherein the inner wall (11) of the housing (6) comprises a shoulder (50) extending substantially radially, said shoulder (50) covering the end of the flexible membrane (32) when said membrane (32) is in the deployed position.

13. Air vent according to anyone of claims 1 to 12, wherein the flexible membrane (32) has a thickness comprised between 0,1 mm and 0,3 mm.

14. Interior trim part for a vehicle comprising at least an air vent device (1) according to anyone of claims 1 to 13.

## Patentansprüche

1. Lüftungsvorrichtung (1) für ein Fahrzeug, aufweisend:
- ein Lüftungsrohr (2), das sich entlang einer Längsachse (L) erstreckt,
- eine Luftauslassvorrichtung (4), die sich an einem Stromabwärts-Endabschnitt des Lüftungsrohrs (2) erstreckt und einen Auslass definiert, durch welchen hindurch Luft, die in dem Lüftungsrohr (2) strömt, die Lüftungsvorrichtung verlässt, wobei die Luftauslassvorrichtung (4) sich gemäß einer Hauptachse (A) erstreckt und relativ zu dem Lüftungsrohr (2) bewegbar ist, sodass die Richtung des Luftstroms, der durch den Auslass hindurchpassiert, gesteuert werden kann in Abhängigkeit von der Position der Luftauslassvorrichtung (4) in dem Lüftungsrohr (2),
- einen Aktuator (12), der an der Luftauslassvorrichtung (4) fest angebracht ist und angeordnet ist, um die Luftauslassvorrichtung (4) relativ zu dem Lüftungsrohr (2) zu bewegen, und
- ein Schließelement (30), das bewegbar ist zwischen einer Offen-Position, in welcher Luft durch dem Auslass hindurch strömen kann, und einer Geschlossen-Position, in welcher das Schließelement (30) Fluidkommunikation zwischen dem Lüftungsrohr (2) und dem Auslass verhindert, wobei der Aktuator (12) an dem Schließelement (30) angebracht ist und entlang der Hauptachse (A) relativ zu der Luftauslassvorrichtung translationsbewegbar ist, wobei die Translationsbewegung bewirkt, dass das Schließelement (30) sich zwischen der Offen- und der Geschlossen-Position bewegt, wobei das Schließelement (30) wenigstens eine flexible Membran (32) aufweist, **dadurch gekennzeichnet, dass** die flexible Membran (32) bewegbar ist zwischen einer Zusammenleg-Position, in welcher die flexible Membran (32) um die Hauptachse (A) herum zusammengelegt ist in der Offen-Position des Schließelements (30), und einer Entfaltungs-Position, in welcher die Membran (32) sich radial in der Luftauslassvorrichtung (4) erstreckt und die Luftauslassvorrichtung (4) in der Geschlossen-Position des Schließelements (30) absperrt.

2. Lüftungsvorrichtung gemäß Anspruch 1, wobei ein erstes Ende der Membran (32) an dem Aktuator (12) angebracht ist, ein zweites Ende der Membran (32), das dem ersten Ende entgegengesetzt ist, mit wenigstens einer Führungsrampe der Luftauslassvorrichtung (4) zusammenwirkt, wobei die Führungsrampe sich im Wesentlichen radial zwischen einer Wand (11) der Luftauslassvorrichtung (4) und der Hauptachse erstreckt, sodass die Bewegung des Aktuators (12) entlang der Hauptachse (A) bewirkt, dass das zweite Ende der Membran (32) an der Führungsrampe gleitet, um die flexible Membran (32) zwischen deren Zusammenleg-Position und deren Entfaltungsposition zu bewegen.

3. Lüftungsvorrichtung gemäß Anspruch 2, wobei das Schließelement (30) wenigstens ein Führungselement (40) aufweist, das an dem zweiten Ende der flexiblen Membran (32) angebracht ist, wobei das Führungselement (40) in einer gleitenden Weise an der Führungsrampe der Luftauslassvorrichtung (4) bewegbar ist.

4. Lüftungsvorrichtung gemäß Anspruch 3, wobei das Führungselement (40) einen Führungszapfen (44) aufweist, der in einen Führungsschlitz (42) eingesetzt ist, der in der Führungsrampe bereitgestellt ist, wobei der Führungszapfen (44) in einer gleitenden Weise in dem Führungszapfen (42) bewegbar ist.

5. Lüftungsvorrichtung gemäß Anspruch 3 oder 4, wobei das Schließelement (30) aufweist eine Mehrzahl von Führungselementen (40), die um die Hauptachse (A) herum verteilt sind, wobei jedes Führungselement (40) an einer korrespondierenden Führungsrampe angeordnet ist, die sich im Wesentlichen radial zwischen der Wand (11) der Luftauslassvorrichtung (4) und der Hauptachse (A) erstreckt.

6. Lüftungsvorrichtung gemäß Anspruch 5, wobei das Schließelement (30) eine Mehrzahl von flexiblen Membranen (32) aufweist, wobei jede flexible Membran (32) sich zwischen zwei aufeinanderfolgenden Führungselementen (40) erstreckt.

7. Lüftungsvorrichtung gemäß Anspruch 5, wobei die Führungselemente (40) an der flexiblen Membran (42) angeformt sind.

8. Lüftungsvorrichtung gemäß irgendeinem der Ansprüche 1 bis 7, wobei die Luftauslassvorrichtung (4) ein Gehäuse (6) aufweist, wobei das Gehäuse (6) eine Außenwand (8) aufweist, die in Reibkontakt mit einer Innenwand des Lüftungsrohrs (2) ist und relativ zu der Innenwand des Lüftungsrohrs (2) drehbewegbar ist, sodass die Richtung des Luftstroms, der durch den Auslass hindurchpassiert, gesteuert werden kann in Abhängigkeit von der Position des Gehäuses (6) in dem Lüftungsrohr (2).

9. Lüftungsvorrichtung gemäß Anspruch 8, wobei der Aktuator (12) eine zentrale Stange (14) aufweist, die sich entlang der Hauptachse (A) der Luftauslassvorrichtung (4) erstreckt, wobei die zentrale Stange (14) entlang der Hauptachse (A) translationsbewegbar ist in einer zentralen Aussparung, die an dem Gehäuse (6) angebracht ist.

10. Lüftungsvorrichtung gemäß Anspruch 9, wobei die zentrale Stange (14) und die zentrale Aussparung (16) eine Mehrzahl von zusammenwirkenden Verriegelungselementen (22) aufweisen, die angeordnet sind, um die zentrale Stange (14) in der zentralen Aussparung (16) in diversen axialen Positionen des Aktuators (12) zu verriegeln korrespondierend zu diversen Entfaltungszuständen der Membran (32) in der Luftauslassvorrichtung (4).

11. Lüftungsvorrichtung gemäß irgendeinem der Ansprüche 8 bis 10, wobei der Aktuator (12) ein Ablenkelement (24) aufweist, das sich quer durch das Gehäuse (6) erstreckt, wobei das Ablenkelement (24) entlang der Hauptachse (A) translationsbewegbar ist gegen die Innenwand (11) des Gehäuses (6) .

12. Lüftungsvorrichtung gemäß irgendeinem der Ansprüche 8 bis 11, wobei die Innenwand (11) des Gehäuses (6) eine Schulter (50) aufweist, die sich im Wesentlichen radial erstreckt, wobei die Schulter (50) das Ende der flexiblen Membran (32) abdeckt, wenn die Membran (32) in der Entfaltungsposition ist.

13. Lüftungsvorrichtung gemäß irgendeinem der Ansprüche 1 bis 12, wobei die flexible Membran (32) eine Dicke hat, die zwischen 0,1 mm und 0,3 mm liegt.

14. Innenverkleidungsteil für ein Fahrzeug, aufweisend wenigstens eine Lüftungsvorrichtung (1) gemäß irgendeinem der Ansprüche 1 bis 13.

## Revendications

1. Dispositif de purge d'air (1) pour un véhicule comprenant :
un conduit d'air (2) s'étendant le long d'un axe longitudinal (L),
un dispositif de sortie d'air (4) s'étendant au niveau d'une partie extrême en aval du conduit d'air (2) et définissant une sortie à travers laquelle l'air circulant dans le conduit d'air (2) sort du dispositif de purge d'air, ledit dispositif de sortie d'air (4) s'étendant selon un axe principal (A) et étant mobile par rapport audit conduit d'air (2) de sorte que la direction du flux d'air passant par la sortie peut être contrôlée en fonction de la position du dispositif de sortie d'air (4) dans le conduit d'air (2),
un actionneur (12) fixement fixé au dispositif de sortie d'air (4) et agencé pour déplacer le dispositif de sortie d'air (4) par rapport au conduit d'air (2), et
un élément de fermeture (30) mobile entre une position ouverte dans laquelle l'air est autorisé à circuler à travers la sortie, et une position fermée dans laquelle l'élément de fermeture (30) empêche la communication de fluide entre le conduit d'entrée (2) et la sortie, l'actionneur (12) étant fixé à l'élément de fermeture (30) et étant mobile en translation le long de l'axe principal (A) par rapport au dispositif de sortie d'air, ledit mouvement en translation amenant l'élément de fermeture (30) à se déplacer entre la position ouverte et fermée,
ledit élément de fermeture (30) comprenant au moins une membrane flexible (32), **caractérisé en ce que** ladite membrane flexible (32) est mobile entre une position pliée, dans laquelle la membrane flexible (32) est pliée autour de l'axe principal (A) dans la position ouverture de l'élément de fermeture (30), et une position déployée dans laquelle la membrane (32) s'étend radialement dans le dispositif de sortie d'air (4) et scelle le dispositif de sortie d'air (4) dans la position fermée de l'élément de fermeture (30).

2. Dispositif de purge d'air selon la revendication 1, dans lequel une première extrémité de la membrane (32) est fixée à l'actionneur (12), une seconde extrémité de la membrane (32) opposée à la première extrémité, coopérant avec au moins une rampe de guidage du dispositif de sortie d'air (4), ladite rampe de guidage s'étendant sensiblement radialement entre une paroi (11) du dispositif de sortie d'air (4) et l'axe principal de sorte que le mouvement de l'actionneur (12) le long de l'axe principal (A) amène la seconde extrémité de la membrane (32) à coulisser sur la rampe de guidage afin de déplacer la membrane flexible (32) entre sa position pliée et sa position déployée.

3. Dispositif de purge d'air selon la revendication 2, dans lequel l'élément de fermeture (30) comprend au moins un élément de guidage (40) fixé à la seconde extrémité de la membrane flexible (32), ledit élément de guidage (40) étant mobile d'une manière coulissante sur la rampe de guidage du dispositif de sortie d'air (4).

4. Dispositif de purge d'air selon la revendication 3, dans lequel l'élément de guidage (40) comprend une broche de guidage (44) insérée dans une fente de guidage (42) prévue dans la rampe de guidage, ladite broche de guidage (44) étant mobile d'une manière coulissante dans ladite fente de guidage (42).

5. Dispositif de purge d'air selon la revendication 3 ou 4, dans lequel l'élément de fermeture (30) comprend une pluralité d'éléments de guidage (40) répartis autour de l'axe principal (A), chaque élément de guidage (40) étant placé sur une rampe de guidage correspondante s'étendant de manière sensiblement radiale entre la paroi (11) du dispositif de sortie d'air (4) et l'axe principal (A).

6. Dispositif de purge d'air selon la revendication 5, dans lequel l'élément de fermeture (30) comprend une pluralité de membranes flexibles (32), chaque membrane flexible (32) s'étendant entre deux éléments de guidage (40) successifs.

7. Dispositif de purge d'air selon la revendication 5, dans lequel les éléments de guidage (40) sont moulé sur la membrane flexible (42).

8. Dispositif de purge d'air selon l'une quelconque des revendications 1 à 7, dans lequel le dispositif de sortie d'air (4) comprend un boîtier (6), ledit boîtier (6) comprenant une paroi externe (8) en contact de friction avec une paroi interne du conduit d'air (2) et étant mobile en rotation par rapport à ladite paroi interne dudit conduit d'air (2), de sorte que la direction du flux d'air passant par la sortie peut être contrôlée en fonction de la position du boîtier (6) dans le conduit d'air (2).

9. Dispositif de purge d'air selon la revendication 8, dans lequel l'actionneur (12) comprend une tige centrale (14) s'étendant le long de l'axe principal (A) du dispositif de sortie d'air (4), ladite tige centrale (14) étant mobile en translation le long de l'axe principal (A) dans un évidement central fixé au boîtier (6).

10. Dispositif de purge d'air selon la revendication 9, dans lequel la tige centrale (14) et l'évidement central (16) comprennent une pluralité d'éléments de blocage (22) coopératifs agencés pour bloquer la tige centrale (14) dans l'évidement central (16) dans différentes positions axiales de l'actionneur (12), correspondant à différents états de déploiement de la membrane (32) dans le dispositif de sortie d'air (4).

11. Dispositif de purge d'air selon l'une quelconque des revendications 8 à 10, dans lequel l'actionneur (12) comprend un élément de déflecteur (24) s'étendant sur le boîtier (6), ledit élément de déflecteur (24) étant mobile en translation le long de l'axe principal (A) contre la paroi interne (11) du boîtier (6).

12. Dispositif de purge d'air selon l'une quelconque des revendications 8 à 11, dans lequel la paroi interne (11) du boîtier (6) comprend un épaulement (50) s'étendant sensiblement radialement, ledit épaulement (50) recouvrant l'extrémité de la membrane flexible (32) lorsque ladite membrane (32) est dans la position déployée.

13. Purge d'air selon l'une quelconque des revendications 1 à 12, dans lequel la membrane flexible (32) a une épaisseur comprise entre 0,1 mm et 0,3 mm.

14. Partie de garniture intérieure pour un véhicule comprenant au moins un dispositif de purge d'air (1) selon l'une quelconque des revendications 1 à 13.
